# EUROPÄISCHE PATENTSCHRIFT

(11) **EP 1 288 596 B1**
(45) Veröffentlichungstag und Bekanntmachung des Hinweises auf die Patenterteilung: **26.09.2007**
(21) Anmeldenummer: 02018616.9
(22) Anmeldetag: 20.08.2002
(51) Int. Cl.: F25B 49/04, F25B 17/08, F25B 30/04, F25B 29/00

(54) **Regelverfahren für eine Adsorptionswärmepumpe**
Regulating method for an adsorption heat pump
Procédé de régulation d'une pompe à chaleur à adsorption

(30) Priorität: 24.08.2001 DE 10142915; 29.08.2001 DE 10142848
(43) Veröffentlichungstag der Anmeldung: 05.03.2003
(73) Patentinhaber: Vaillant GmbH, 42859 Remscheid (DE)
(72) Erfinder: Heim, Johann-Ludwig, 42857 Remscheid (DE); Hocker, Thomas, Dr., 42857 Remscheid (DE); Lang, Rainer, Dr., 51067 Köln (DE); Marth, Frank, 56581 Melsbach (DE); Marx, Uwe, 51375 Leverkusen (DE); Prescha, Ralph, 42659 Solingen (DE); Wienen, Johann, 46359 Heiden (DE); Burgdorf, Achim, 42929 Wermelskirchen (DE); Dawoud, Belal, Dr., 52066 Aachen (DE); Gasper, Ralf, 52156 Monschau (DE); Miltkau, Thorsten, 52066 Aachen (DE)
(74) Vertreter: Hocker, Thomas

(56) Entgegenhaltungen:
- EP-A- 1 108 964
- DE-A- 3 609 306
- DE-A- 10 038 637

## Beschreibung

Die vorliegende Erfindung bezieht sich auf ein Regelverfahren für eine Adsorptionswärmepumpe gemäß dem einleitenden Teil des unabhängigen Patentanspruchs. Die zu regelnde Adsorptionswärmepumpe ist in ihrem hydraulischen Aufbau mit ihren Kreisläufen bereits Gegenstand mehrerer angemeldeter Patentanmeldungen, ihr Aufbau und ihre Funktionsweise wird somit vorausgesetzt.

EP-A-1 108 964 offenbart ein Regelverfahren gemäß Oberbegriff des Anspruchs 1.

Es hat sich jedoch als relativ schwierig erwiesen, eine solche Adsorptionswärmepumpe so zu regeln, daß der im Brenner als Wärme umgesetzte Energiestrom, geliefert im wesentlichen durch das dem Brenner zugeführte Erdgas, ein Minimum wird und die dem Verbraucher in der Wärmesenke zugeführte Wärmemenge in der Zeiteinheit maximiert wird, wobei hierbei zu beachten ist, daß der letztgenannte Wärmestrom noch temperaturabhängig ist, da die einzelnen Verbraucher in der Wärmesenke mit unterschiedlich hohen Temperaturen zu speisen sind.

Die Lösung dieser Aufgabe liegt bei einem Regelverfahren der eingangs näher bezeichneten Art erfindungsgemäß in den kennzeichnenden Merkmalen des unabhängigen Patentanspruchs 1.

Hieraus resultiert der Vorteil, daß man durch die Aufteilung der Regelung in eine zweistufige Kaskade mit einem übergeordneten und einem untergeordneten Regelkreis die Abgabetemperatur der Wärmepumpe an den Verbraucher unabhängig von der Höhe des Temperaturwertes, in dem der Wärmestrom an den Verbraucher zu liefern ist, stabil halten kann, weil die zweite, die untergeordnete Kaskade, die Energiezufuhr beherrscht, die in den Primärkreislauf zu liefern ist.

In Ausgestaltung der Erfindung werden die Merkmale des ersten abhängigen Anspruchs vorgeschlagen, in dem die Regelgröße der übergeordneten Kaskade so festgelegt wird, daß sie möglichst genau, aber auch in technisch leicht verifizierbarer Weise den Anforderungen gerecht wird, während die Stellgröße so gewählt ist, daß sie technisch möglichst einfach dargestellt werden kann.

Die Merkmale des zweiten abhängigen Patentanspruchs befassen sich mit der Wahl der Regelgröße und der Stellgröße in der untergeordneten Kaskade und legen auch hier bei der Regelgröße diejenige fest, die technisch leicht beherrschbar ist und andererseits zu bestmöglichem Ergebnis führt, während die Stellgröße wieder so einfach wie möglich technisch beherrschbar gewählt wird.

Die Merkmale des dritten Patentanspruchs zielen auf eine praxisgerechte Wahl der Führungsgröße bei der Speisung in ihren angefahrenen Temperaturen stark unterschiedlichen Verbraucherelementen.

Die Festlegung des Sollwertes gemäß Anspruch 4 bei der untergeordneten Kaskade führt zu einer erheblichen Vereinfachung dieser Regelkaskade.

Mit den Merkmalen des vorletzten abhängigen Anspruchs wird eine zusätzliche Temperaturdifferenzregelung vorgestellt, die in den Sekundärkreislauf nur dann eingreift, wenn die Temperaturdifferenz einen bestimmten Stellwert überschreitet, weil sie es unter diesem Grenzwert nicht zu dem Wirkungsgrad der Adsorptionswärmepumpe bringt.

Die Merkmale des letzten abhängigen Anspruchs liegen in der Auswahl der Führungsgröße für die Temperaturdifferenzregelung nach rein praktischen Gesichtspunkten.

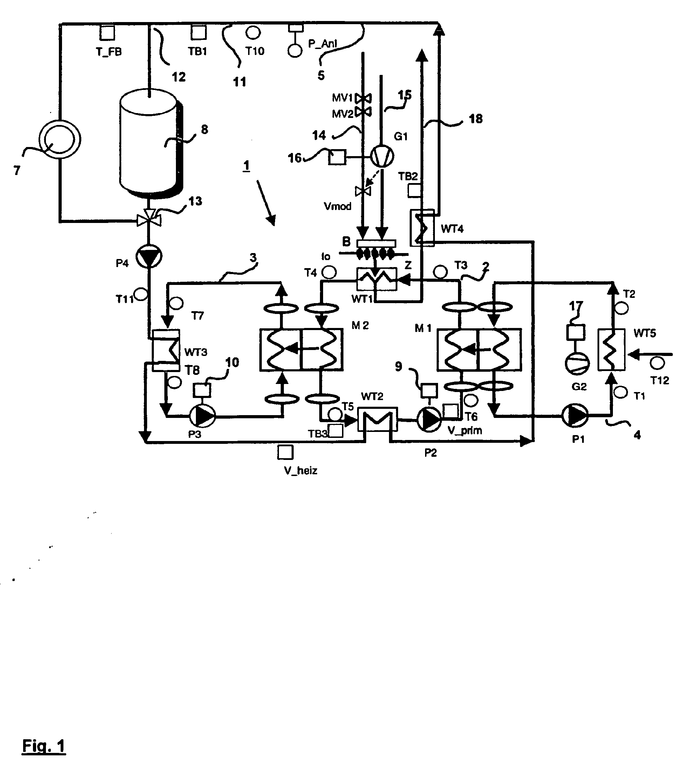

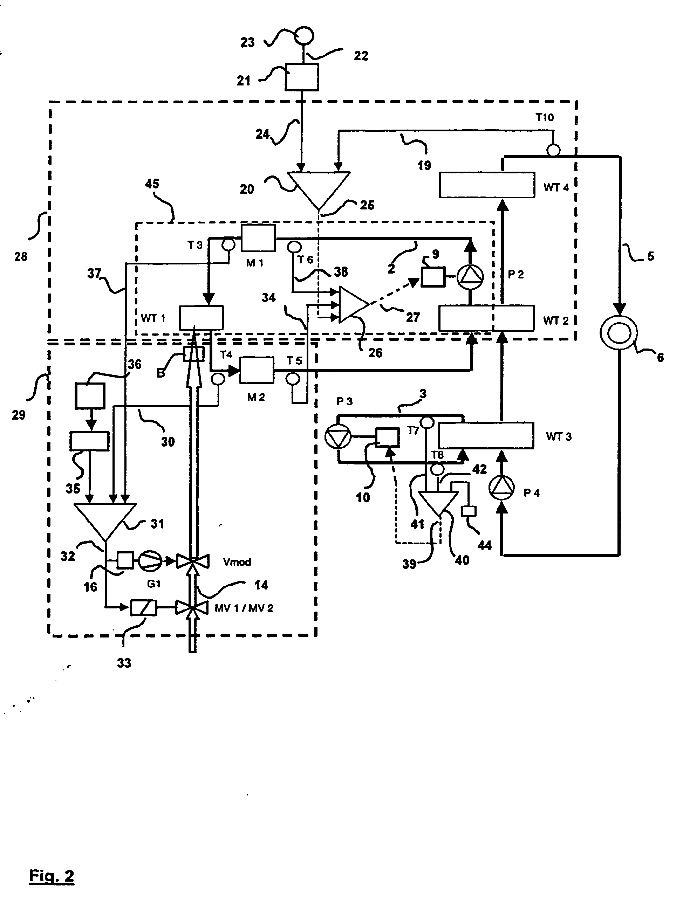

Weitere Ausgestaltungen und besonders vorteilhafte Weiterbildungen der Erfindung ergeben sich anhand der nun folgenden Beschreibung eines Ausführungsbeispiels der Erfindung anhand der Figuren 1 und 2 der Zeichnung.

Es zeigen:
Fig. 1 ein Blockschaltbild der Schaltung einer Adsorptionswärmepumpe und
Fig. 2 ein Blockschaltbild für ihre Regelung.
In beiden Figuren bedeuten gleiche Bezugszeichen jeweils die gleichen Einzelheiten.

Eine Adsorptionswärmepumpe 1 ist aus drei Kreisläufen gebildet, nämlich einem Primärkreislauf 2, einem Sekundärkreislauf 3 und einem Umweltwärmekreislauf 4, wobei der Primärkreislauf 2 über zwei Module M1 und M2, die als Zeolith-Module ausgebildet sind, und einen Adsober und Desorber geschaltet sind, die die beiden anderen Kreisläufe koppeln. Ferner ist ein Verbraucherkreislauf 5 vorgesehen, in den die Adsorptionswärmepumpe 1 geschaltet ist, die eine Wärmesenke 6, bestehend aus einer Heizungsanlage 7 und einem Brauchwasserspeicher 8, mit Wärme beliefert. In den Primärkreislauf 2 sind in Serie zueinanderliegend ein Primärwärmetauscher WT1, an dessen Ausgang ein Temperaturfühler T4 liegt, ein Modul M2, ein Temperaturfühler T5, ein Entkoppelwärmetauscher WT2, eine mit einem Motor 9 versehene Pumpe P2, ein Temperaturfühler T6, ein Modul M1 und ein Temperaturfühler T3 miteinander verschaltet. Im Sekundärkreislauf 3 liegen in Serie, ausgehend vom Modul M2, ein Temperaturfühler T7, ein Verbraucherwärmetauscher WT3, ein Temperaturfühler T8 und eine von einem Motor 10 angetriebene Pumpe P3 in Reihe. Im Umweltwärmekreislauf 4 liegen ausgehend vom Modul M1 eine Pumpe P1, ein Temperaturfühler T1, ein Umweltwärmetauscher WT5 und ein Temperaturfühler T2 in Reihe, wobei dem Umweltwärmestrom selbst ein Temperaturfühler T12 zugeordnet ist.

Der Verbraucherkreislauf 5 geht aus von einem Temperaturfühler T10, der der Wärmesenke 6 unmittelbar vorgeschaltet ist. Von diesem Temperaturfühler führt eine Leitung 11 unmittelbar zu einer Verzweigungsstelle 12, an der sich Leitungen, die zur Heizung 7 und zum Brauchwasserspeicher 8 führen, verzweigen. Diese Leitungen sind stromab von Heizung 7 und Brauchwasserspeicher 8 in einem Vorrangumschaltventil 13 wieder vereinigt, dem eine Pumpe P4 nachgeschaltet ist, von der die entsprechende Leitung des Kreislaufs zum Verbraucherwärmetauscher WT3 führt. Zwischen beiden ist im Verbraucherkreislauf ein Temperaturfühler T11 vorgesehen. Auf den Verbraucherwärmetauscher WT3 folgt dem Verbraucherkreislauf 5 der Entkoppelwärmetauscher WT2 und diesem ein Abgaswärmetauscher WT4. Diesem nachgeschaltet ist wieder der Temperaturfühler T10. Zwischen der Verzweigungsstelle 12 und der Heizungsanlage 7, die aus einer Vielzahl parallel und/oder in Serie liegender Radiatoren, Konvektoren oder auch Fußbodenheizungsrohrschlangen gebildet sein kann, ist ein Temperatur- oder Druckschalter TFB angeordnet, zwischen den Wärmetauschern WT3 und WT2 ist ein weiterer Temperaturoder Druckschalter V_{heiz} vorgesehen. Im Primärkreislauf 2 können am Ort des Temperaturfühlers T5 ein Temperaturschalter TB 3 und am Ort des Temperaturfühlers T6 ein weiterer Temperatur- oder Druckschalter Vₚᵣᵢₘ angeordnet sein.

Stromauf des Temperaturfühlers T10 ist ein Druckschalter Pₐₙₗ an der Leitung 11 vorgesehen.

Der Primärwärmetauscher WT1 ist von einem Brenner B beheizt, der von einer Erdgasleitung 14 und einer Luftleitung 15 mit Energie gespeist ist. In der Erdgasleitung sind Magnetventile MV 1 und MV2 in Serie zueinander liegend eingefügt die, elektrisch parallel geschaltet, einem Feuerungsautomaten als Absperrventil dienen. Ein weiteres Ventil Vmod dessen Öffnungsgrad über einen Gas-Luftverbund vom Gebläse G1 abhängt, ist diesen nachgeschaltet. In der Luftleitung liegt ein, vom Motor16 angetriebenes Gebläse G1 in Serie. Dem Umweltwärmetauscher WT5 kann ein weiteres von einem Motor 17 angetriebenes Gebläse G2 zugeordnet sein . Mit diesem Gebläse wird die durch den Temperaturfühler T12 gemessene Luft durch den Umweltwärmetauscher WT 5 gefördert. Je nach Ausführungsform des Umweltwärmetauschers kann dieses Gebläse G2 entfallen. Den Primärwärmetauscher WT 1 verläßt eine Abgasleitung 8, die den Abgaswärmetauscher WT4 durchsetzt und stromab dieses mit einem Temperaturschalter TB 2 versehen ist.

Der Aufbau der Regelung wird nun anhand der Figur 2 beschrieben. Die Temperatur im Verbraucherkreislauf 5 unmittelbar stromauf der Wärmesenke 6 wird durch den Temperaturfühler T10 gemessen und über eine Leitung 19 auf einen Regelverstärker 20 gegeben. Ein zweiter Eingang dieses Regelverstärkers besteht aus einem Vorlauftemperatur-Soll-Wertgeber 21, dem über eine Leitung 22 ein Außentemperatufühler 23 aufgeschaltet ist. Damit ist das auf eine Verbindungsleitung 24 dem Regelverstärker 20 aufgeschaltete Signal mit der Außentemperatur linear und stetig variabel. Ein Ausgang 25 des Regelverstärkers 20 ist auf einen weiteren Regelverstärker 26 als Eingang geschaltet, dessen Ausgang 27 mit dem Motor 9 der Pumpe W2 verbunden ist und diesen speist. Der Motor 9 ist drehrichtungsumkehrbar, oder durch ein Getriebe zwischen Motor und Pumpe P2 ist die Drehrichtung der Pumpe P2 umkehrbar. Es ist auch möglich, 2 Pumpen mit je einem Motor 9 vorzusehen und entweder den einen Motor oder den anderen Motor vom Ausgang 27 je nach gewünschter Drehrichtung der Pumpe anzusteuern. Das gleiche kann auch gemäß einer weiteren Alternative durch eine Pumpe mit einem Motor und entsprechend umsteuerbaren Ventilen, die der Pumpe vor- oder nachgeschaltet sind, erreicht werden.

Wesentlich ist nur, daß die Förderrichtung im Primärkreis 2 umkehrbar ist und daß der Massenstrom im Primärkreislauf 2 durch Variationen der Pumpendrehzahl, sprich: der Motorleistung veränderbar ist. Dies entspricht der übergeordneten Kaskade 28 des Kaskadenregelverfahrens. Die untergeordnete Kaskade 29 des Regelverfahrens beinhaltet den Primärwärmetauscher WT1 zusammen mit dem über das Gebläse G1 gesteuerten, modulierenden Gasventil Vmod und den Temperaturfühlern T4 und T3. Der Temperaturfühler T4 ist über eine Leitung 30 mit einem Eingang eines dritten Regelverstärkers 31 verbunden, dessen Ausgang 32 über einen hier nicht dargestellten Gasfeuerungsautomaten auf einen Stellmagneten 33 des Magnetventils MV2 und parallel hierzu auf den Motor 16 des Gebläses G1 geschaltet ist.

Der Temperaturfühler T3 des Primärkreislaufs 2 ist über eine Leitung 37 mit einem weiteren Eingang des dritten Regelverstärkers 31 verbunden. Ein dritter Eingang dieses Regelverstärkers ist durch einen Soll-Wertgeber 35 gegeben, dessen Soll-Wert als Festwert von diesem justierbar vorgegeben werden kann, bevorzugt auf einen Wert von 150 °C.

Der weitere Regelverstärker 26 des Primärkreislauf 2 weist als weitere Eingänge den über eine Leitung 34 mit ihm verbundenen Temperaturfühler T5 und über eine weitere Leitung 38 den mit ihm verbundenen Temperaturfühler T6 auf. Je nach beabsichtigter Förderrichtung des Massenstroms im Primärkreislauf 2 ist der Temperaturfühler T5 oder der Temperaturfühler T6 im Regelverstärker durchgeschaltet, und zwar wird immer der stromauf des adsorbierenden Moduls liegende Temperaturfühler mit seinem Signal durchgeschaltet. Für die Wahl der Signale der Temperaturfühler T4 und T3 auf den dritten Regelverstärker 31 gilt dies sinngemäß, jedoch bezogen auf das desorbierende Modul.

Aus der Fig. 2 ist auch gut ersichtlich, daß im Verbraucherkreislauf 5 die Wärmetauscher WT3, WT2 und WT4 der Adsorptionswärmepumpe 1 in Serie hintereinander liegen, wobei dieser Serienschaltung die Pumpe P4 vorgeschaltet ist, die somit zwischen dem erst gelegenen Wärmetauscher WT3 und der Wärmesenke 6 im kühlsten Bereich dieses Kreislaufs 5 liegt.

Das Umschalten der Durchflußrichtung im Primärkreislauf 2 beruht auf dem Umschalten der beiden Module M1 und M2, von denen jeweils einer als Adsorber und der andere als Desorber geschaltet ist und umgekehrt.

Im Sekundärkreislauf 3 liegt die mit dem Motor 10 versehene Pumpe P3 im Ausgang 39 eines vierten Regelverstärkers 40, dem als Eingänge Leitungen 41 und 42 der beiden Temperaturfühler T7 und T8 aufgeschaltet sind. Dem Regelverstärker 40 wird ein variierbarer Soll-Wert eines Soll-Wertgebers 44 zugeführt. Dieser stellt einen Soll-Wert von etwa 2-8 K, vorzugsweise 5 K, ein, auf den die Temperaturdifferenz zwischen den Temperaturfühlern T7 und T8 geregelt wird, indem die Leistungszufuhr vom Ausgang 39 an den Motor 10 der Pumpe 3 variiert wird.

Die Funktion des eben beschriebenen Kaskadenregelverfahrens ist folgende: Bei der übergeordneten Kaskade wird der Ist-Wert der Vorlauftemperatur für die Wärmesenke 6, gemessen durch den Temperaturfühler T10, mit dem Soll-Wert, gegeben durch den Soll-Wertgeber 21, verglichen und die Regelabweichung ermittelt. Diese wird im Ausgang 25 auf den zweiten Regelverstärker 26 gegeben und dort mit der Temperatur stromauf des Moduls M1, gegeben durch den Temperaturfühler T5 oder T6 je nach Durchströmrichtung im Primärkreislauf 2 verglichen. Hieraus resultiert das endgültige Stellsignal über den Ausgang 27 an den Motor 9 der Pumpe P2. Der Massendurchsatz im Primärkreislauf 2 wird so gesteuert, daß die von der Führungsgröße 21 vorgegebene Vorlauftemperatur erreicht wird. Um die dafür notwendige Energie in den Primärkreislauf 2 einzuspeisen, ist die untergeordnete Kaskade 29 notwendig, der als Ist-Wert die Temperatur stromauf des Moduls 2 als Ist-Wert aufgegeben wird. Dies kann vom Temperaturfühler T4 oder vom Temperaturfühler T3 geschehen, je nach gerade herrschender Durchströmrichtung im Primärkreislauf 2. Dieser Wert wird eingangsseitig des dritten Regelverstärkers 31 mit dem am Soll-Wertgeber 35 über den Einsteller 36 vorgegebenen Soll-Wert, hier 150 °C, verglichen. Ein entsprechend der Regelabweichung vorliegendes Signal am Ausgang 32 wird als Stellgröße sowohl über den hier nicht dargestellten Gasfeuerungsautomaten auf den Antriebsmagneten 33 des Magnetventils MV2 für die Gasfreigabe als auch an den Motor 16 des Gebläses G1 im Luftdurchsatz und über diesen auf das Gasventil Vmod im Gasdurchsatz gegeben. Sowohl der eingestellte Gas- wie auch der Luftdurchsatz speisen den Brenner 2 und damit den auf den Primärwärmetauscher WT1 gegebenen Wärmestrom, der dort in den Primärkreislauf 2 eingespeist wird.

## Patentansprüche

1. Regelverfahren für eine Adsorptionswärmepumpe (1) mit
• einem von einem Brenner (B) beheizten Primärwärmetauscher (WT1), wobei der Brenner (B) von einer Erdgasleitung (14) und einer Luftleitung (15) mit Energie gespeist wird, und in der Erdgasleitung (14) mindestens ein Magnetventil (MV1, MV2) und in der Luftleitung (15) ein von einem Motor (16) angetriebenes Gebläse (G1) angeordnet ist,
• 2 Zeolith-Modulen (M1, M2) die dem Primärwärmetauscher (WT1) in einem Primärkreislauf (2) unmittelbar vor- und nachgeschaltet sind,
• einem Entkoppelwärmetauscher (WT2) und einer Pumpe (P2), die gemeinsam in Reihe liegend zwischen den Zeolith-Modulen (M1 und M2) angeordnet sind, und
• mit einem Sekundärkreislauf (3),
• in welchen der als Adsorber geschaltete Zeolith-Modul (M2 oder M1) mit einem Verbraucherwärmetauscher (WT3) in Reihe liegt,
• der zusammen mit dem Entkoppelwärmetauscher (WT2) in einem Verbraucherkreislauf (5) angeordnet ist,
• der eine Wärmesenke (6) aufweist, **dadurch gekennzeichnet, dass**
die Adsorptionswärmepumpe als stetige Kaskadenregelung geregelt wird, in dem die Temperaturregelung des Verbraucherkreislaufs (5) in einer übergeordneten Kaskade (28)
• durch den Vergleich der Temperatur eines Vorlauftemperaturfühlers T10 für die Wärmesenke (6) über einen Regelverstärker (20) mit dem Ausgang (24) eines Sollwertgebers (21),
• durch die Ermittlung einer Regelabweichung in einem Regelverstärker (26), die mit der Temperatur stromauf des Moduls (M1), gegeben durch den Temperaturfühler T5 und T6, verglichen wird und
• mit dem daraus resultierenden Stellsignal an den Motor (9) der Pumpe (P2) erfolgt, und
die Temperaturregelung des Primärkreislaufs (2) in einer untergeordneten Kaskade (29)
• durch den Vergleich der Temperatur einer Temperaturfühlers T3 oder T4, gelegenen stromabwärts des Primärwärmetauschers (WT1), mit dem Ausgang eines Sollwertgebers (35) und
• mit dem daraus resultierenden Signal an den Gebläsemotor (16) und der Spule (33) des Magnetventils MV1/MV2 erfolgt.

2. Regelverfahren nach Anspruch 1, **dadurch gekennzeichnet, dass** der übergeordneten Kaskade (28) als Regelgröße die Temperatur zwischen dem letzten Wärmetauscher (WT4), der Adsorptionswärmepumpe (1), dem Verbraucherkreislauf (5) und der Wärmesenke (6) und als Stellgröße der Massendurchsatz im Primärkreislauf (2) zugeordnet sind.

3. Regelverfahren nach Anspruch 1, **dadurch gekennzeichnet, dass** der untergeordneten Kaskade (29) als Regelgröße die Temperatur stromauf des als Desorber geschalteten Zeolith-Moduls (M2 oder M1) im Primärkreislauf (2) und als Stellgröße die Massendurchsätze an Brennstoff und Luft zum Brenner (B) zugeordnet sind.

4. Regelverfahren nach einem der Ansprüche 1 bis 3, **dadurch gekennzeichnet, dass** der Soll-Wert in der übergeordneten Kaskade (28) die Außentemperatur θA als gleitende Führungsgröße zugeordnet ist.

5. Regelverfahren nach Anspruch 1 oder 2, **dadurch gekennzeichnet, dass** dem Soll-Wert der untergeordneten Kaskade (29) ein justierbarer Festwert als starre Führungsgröße zugeordnet ist.

6. Regelverfahren, nach Anspruch 1 oder 2, **dadurch gekennzeichnet, dass** zusätzlich eine Temperaturdifferenzregelung im Sekundärkreislauf (3) vorgenommen wird, welche als Führungsgröße einen justierbaren Soll-Wert und als Stellgröße den Massendurchsatz im Sekundärkreislauf (3) zugeordnet sind.

7. Regelverfahren nach Anspruch 5, **dadurch gekennzeichnet, daß** der Soll-Wert im Bereich von 2-8 K, vorzugsweise bei 5 K liegt.

## Claims

1. A process for the control of an adsorption heat pump (1) which comprises a primary heat exchanger (WT1) heated by a burner (B), with such burner (B) being supplied with energy from a natural gas line (14) and an air supply line (15), and in the natural gas supply line (14) provision being made for at least one magnetic valve (MV1, MV2) and in the air supply line (15) provision being made for a blower (G1) driven by a motor (16), and further with 2 zeolite modules (M1, M2) being arranged in a primary circuit (2) immediately upstream and downstream of the said primary heat exchanger (WT1), with a decoupling heat exchanger (WT2) and a pump (P2) being jointly series connected between the zeolite modules (M1 and M2), and which further comprises a secondary circuit (3) in which the zeolite module acting as an adsorber (M2 or M1) is series connected with a consumer heat exchanger (WT3) which latter, together with the decoupling heat exchanger (WT2), is arranged in a consumer circuit (5) comprising a heat sink (6), **characterised in that** the adsorption heat pump is controlled by a continuous-action cascade control system in which the temperature of the consumer circuit (5) is controlled in a first control loop, ranking as a higher-level cascade (28), by comparing the temperature of an upstream temperature sensor (T10) for the heat sink (6) via a control amplifier (20) with the output (24) of a setpoint generator (21), and further by determining a system deviation in a control amplifier (26), which deviation is compared with the temperature upstream of the module (M1), given by the temperature sensors T5 and T6, such first control loop leading to the output of a control signal to the motor (9) of the pump (P2), and in which in a second control loop, ranking as a lower-order cascade (29), the temperature of the primary circuit (2) is controlled by comparing the temperature of a temperature sensor T3 or T4 located downstream of the primary circuit (WT1) with the output of a setpoint generator (35), such second control loop leading to the output of a signal to the blower motor (16) and the coil (33) of the magnetic valve MV1/MV2.

2. A control process as claimed in Claim 1, **characterised in that** the temperature between the last heat exchanger (WT4), the adsorption heat pump (1), the consumer circuit (5) and the heat sink (6) is allocated as a controlled variable to the higher-level cascade (28), and the mass flow rate in the primary circuit (2) is allocated as a manipulated variable to the higher-level cascade (28).

3. A control process as claimed in Claim 1, **characterised in that** the temperature upstream of the zeolite module operating as a desorber (M2 or M1) in the primary circuit (2) is allocated as a controlled variable to the lower-level cascade (29), and the mass flow rates of fuel and air to the burner (B) is allocated as a manipulated variable to the lower-level cascade (29).

4. A control process as claimed in Claims 1 to 3, **characterised in that** the external temperature ⊖A is allocated as a varying reference input to the setpoint value in the higher-level cascade (28).

5. A control process as claimed in Claims 1 or 2, **characterised in that** an adjustable fixed value is allocated as a fixed reference input to the setpoint value in the lower-level cascade (29).

6. A control process as claimed in Claims 1 or 2, **characterised in that** an additional temperature difference control is effected in the secondary circuit (3), to which an adjustable setpoint value is allocated as a reference input and to which the mass flow rate in the secondary circuit (3) is allocated as a manipulated variable.

7. A control process as claimed in Claim 5, **characterised in that** the setpoint value is within the range of 2-8 K, preferably 5 K.

## Revendications

1. Mode de réglage pour une pompe à chaleur à adsorption (1) avec un échangeur de chaleur primaire (WT1) chauffé par un brûleur (B), le brûleur (B) étant alimenté par une conduite de gaz naturel (14) et une conduite d'air (15), la conduite (14) comportant au moins une électrovalve (MV1, MV2), et la conduite (15), un ventilateur (G1) actionné par un moteur (16), 2 modules à zéolite (M1, M2) précédant et suivant directement l'échangeur de chaleur primaire (WT1) dans un circuit primaire (2), un échangeur de chaleur (WT2) et une pompe (P2) disposés ensemble en série entre les modules (M1 et M2), et avec un circuit secondaire (3) comprenant un module à zéolite (M2 ou M1) en série avec un échangeur de chaleur (WT3) et conçu comme adsorbant qui, ensemble avec l'échangeur de chaleur (WT2) est intégré dans un circuit utilisateur (5) qui comprend un puits de chaleur (6), mode **caractérisé par le fait que** la pompe à chaleur à adsorption est à réglage permanent en cascades où le réglage de la température du circuit utilisateur (5) se fait dans une cascade supérieure (28) par la comparaison de la température d'un thermomètre-départ T10 pour le puits de chaleur (6) par l'intermédiaire d'un amplificateur de réglage (20) avec la sortie (24) d'un générateur de consigne (21), par l'établissenent d'un écart de consigne dans un amplificateur de réglage (26), qui est comparé avec la température en amont du module (M1) produite par la sonde thermométrique T5 et T6 et produit le signal de réglage pour le moteur (9) de la pompe (P2) et le réglage de la température du circuit primaire (2) dans une cascade subordonnée (29) par la comparaison de la température d'une sonde thermométrique T3 ou T4 installée en aval de l'échangeur de chaleur primaire (WT1) avec la sortie d'un générateur de consigne (35) et le signal qui en résulte au moteur de ventilateur (16) et de la bobine (33) de l'électrovalve MV1/MV2.

2. Mode de réglage suivant la revendication 1, **caractérisé par le fait que** la température entre le dernier échangeur de chaleur (WT4), la pompe à chaleur à adsorption (1) et le circuit utilisateur (5) et le puits de chaleur (6) est attribuée comme grandeur réglée, et le débit massique dans le circuit primaire (2) comme grandeur réglante à la cascade supérieure (28).

3. Mode de réglage suivant la revendication 1, **caractérisé par le fait que** la température en amont du module à zéolite (M2 ou M1) fonctionnant comme désorbant dans le circuit primaire (2) est attribuée comme grandeur réglée à la cascade subordonnée (29), et comme grandeur réglant les débits massiques de combustible et d'air du brûleur (B).

4. Mode de réglage suivant l'une des revendications 1 à 3, **caractérisé par le fait que** la température extérieure OA est attribuée comme consigne variable à la consigne dans la cascade prioritaire (28).

5. Mode de réglage suivant la revendication 1 ou 2, **caractérisé par le fait qu'**une valeur fixe réglable est attribuée comme consigne fixe à la consigne de la cascade subordonnée (29).

6. Mode de réglage suivant la revendication 1 ou 2, **caractérisé par le fait que** de plus un réglage de la différence de température est effectué dans le circuit secondaire (3) à laquelle est attribué dans le circuit secondaire (3) comme grandeur de commande une consigne ajustable et comme grandeur réglante le débit massique dans le circuit secondaire (3).

7. Mode de réglage suivant la revendication 5, **caractérisé par le fait que** la consigne s'établit dans la zone de 2-8 K, de préférence à 5 K.
